# EUROPÄISCHE PATENTSCHRIFT

(11) **EP 4 298 482 B1**
(45) Veröffentlichungstag und Bekanntmachung des Hinweises auf die Patenterteilung: **19.11.2025**
(21) Anmeldenummer: 22712518.4
(22) Anmeldetag: 24.02.2022
(51) Int. Cl.: G05B 9/03, G06F 11/07, G06F 11/14, G06F 11/16, G06F 11/20

(54) **VERFAHREN ZUM BETRIEB EINER FEHLERTOLERANT AUSGEBILDETEN GERÄTESTEUERUNG UND GERÄTESTEUERUNG**
METHOD FOR OPERATING A FAULT-TOLERANT DEVICE CONTROLLER, AND DEVICE CONTROLLER
PROCÉDÉ DE FONCTIONNEMENT D'UN DISPOSITIF DE COMMANDE DE DISPOSITIF INSENSIBLE AUX DÉFAILLANCES ET DISPOSITIF DE COMMANDE DE DISPOSITIF

(30) Priorität: 26.02.2021 DE 102021201874
(43) Veröffentlichungstag der Anmeldung: 03.01.2024
(73) Patentinhaber: thyssenkrupp Presta AG, 9492 Eschen (LI); thyssenkrupp AG, 45143 Essen (DE)
(72) Erfinder: KAKAS, Peter, 1118 Budapest (HU)
(74) Vertreter: thyssenkrupp Intellectual Property GmbH
(86) Internationale Anmeldenummer: PCT/EP2022/054587
(87) Internationale Veröffentlichungsnummer: WO 2022/180137

(56) Entgegenhaltungen:
- CN-A- 112 346 330
- DE-A1- 102019 203 039
- US-A- 4 622 667
- US-A1- 2015 241 304

## Beschreibung

Die Erfindung betrifft ein Verfahren zum Betrieb einer fehlertolerant ausgebildeten Gerätesteuerung mit den Merkmalen des Anspruch 1 und eine Gerätesteuerung nach dem Oberbegriff des Anspruchs 8.

Die Steuerung von sicherheitskritischen Systemen, welche im Falle einer Störung oder eines Ausfalls erhebliche Gefahren, beispielsweise für das Leben oder die Gesundheit der Bediener und/oder unbeteiligter Dritter, auslösen können, bedarf besonderer Sicherheitsvorkehrungen. Aus diesem Grunde werden für die Steuerung sicherheitskritischer Systeme fehlertolerante Gerätesteuerungen eingesetzt, die eine (Not-)Steuerung des Systems auch im Falle einer Störung oder eines Ausfalls einzelner Komponenten der Gerätesteuerung sicherstellen und so das Auftreten von gefährlichen Situationen vermeiden.

Kraftfahrzeuglenkungen sind ein Beispiel für ein solches sicherheitskritisches System. Die Stellmotoren von Kraftfahrzeuglenkungen, beispielsweise der Lenksteller, welcher die Stellung der gelenkten Räder bestimmt oder - im Falle einer Steer-by-Wire Lenkung - auch der Feedback-Aktuator, welcher Rückwirkungen der Fahrbahn auf das Lenkrad überträgt, sind in besonders sicherer Weise anzusteuern, damit das Kraftfahrzeug auch im Falle einer Störung der Lenkung steuerbar bleibt.

Dazu weisen fehlertolerante Gerätesteuerungen üblicherweise mindestens zwei redundant ausgebildete, voneinander unabhängige Kanäle zur Berechnung von Steuerungssignalen auf, welche die Ausgangsgrößen für die Steuerung des zu steuernden Geräts bilden. Ferner ist eine Diagnoseeinrichtung vorgesehen, welche die Signalverarbeitung in den Kanälen überwacht. Um den ordnungsgemäßen Betrieb der Gerätesteuerung zu überwachen, bestimmt die Diagnoseeinrichtung Kontrollgrößen und deren Abweichungen von Referenzvorgaben. Wenn die Abweichungen einen Schwellenwert überschreiten wird dies von der Diagnoseeinrichtung als Funktionsstörung der Gerätesteuerung gewertet und die Diagnoseeinrichtung veranlasst daraufhin eine Überführung der Gerätesteuerung in einen sicheren Zustand. Der sichere Zustand kann beispielsweise dadurch erreicht werden, dass ein fehlerhafter Kanal entweder komplett abgeschaltet, oder in seiner Funktionalität auf Kernfunktionen eingeschränkt wird. Beispielsweise kann eine Einschränkung der von dem gestörten Kanal berechneten Steuersignale auf einen sicheren Bereich vorgesehen sein. Die Funktion der Gerätesteuerung wird im sicheren Zustand zumindest mit 50% der Leistung durch den verbleibenden voll funktionsfähigen Kanal erbracht.

Bestimmungsgemäß verbleibt die Gerätesteuerung in dem sicheren Zustand bis der Fehler bzw. die Störung des betroffenen Kanals durch Wartung oder Reparatur des Systems behoben wurde. Aufgrund der weitreichenden Konsequenzen, die ein Umschalten in einen sicheren Zustand durch die Diagnoseeinrichtung hat, müssen falsch positive Fehlermeldungen durch die Diagnoseeinrichtung so weit wie möglich ausgeschlossen werden. Dies wird in der Praxis dadurch erreicht, dass der Schwellenwert für die Bewertung der ermittelten Abweichungen so groß gewählt wird, dass falsch positive Fehlerdiagnosen durch zufällige Abweichungen eine seltene Ausnahme bleiben. Die Wahl höherer Schwellenwerte führt aber zugleich dazu, dass geringfügige echte Fehler nicht mehr erkannt werden können und die Diagnoseeinrichtung somit weniger sensitiv eingestellt ist. In den bekannten Gerätesteuerungen besteht somit ein Zielkonflikt zwischen der Sensitivität der Diagnoseeinrichtung und der Anzahl falsch positiver Fehlerdiagnosen.

Aus US 4,622,667 A ist ein automatisches Flugsteuerungssystem mit Software-Fehlertoleranz bekannt, das als Reaktion auf einen ersten generischen Fehler funktionsfähig ist. Es verwendet zwei unabhängige Teilsysteme, die jeweils einen Zweikanal-Flugsteuerungscomputer enthalten. Ein Kanal in jedem Flugsteuerungscomputer enthält einen digitalen Prozessor und der andere Kanal enthält zwei digitale Prozessoren. Jeder Flugsteuerungscomputer verfügt über eine kanalübergreifende Überwachung, um Unstimmigkeiten zwischen den Ausgängen der Kanäle zu erkennen. Tritt eine Unstimmigkeit zwischen einem der beiden Verarbeitungselemente in dem Kanal mit zwei Verarbeitungselementen und dem Verarbeitungselement des Kanals mit einem Verarbeitungselement auf, wird das betroffene Verarbeitungselement in dem Zwei-Elemente-Kanal deaktiviert.

US 2015/0241304 A1 beschreibt ein Verfahren zur rechnergestützten Überwachung einer elektrischen Energieerzeugungsanlage, bei dem Ausgangsgrößen der Anlage unter Verwendung eines datengetriebenen Modells auf der Basis entsprechender Eingangsgrößen prognostiziert werden. Für die jeweiligen Eingangsvariablen wird unter Verwendung eines oder mehrerer Dichteschätzer ein Konfidenzmaß ermittelt, das umso höher ist, je größer die Ähnlichkeit der Eingangsvariablen mit bekannten Eingangsvariablen aus Trainingsdaten ist, mit denen das datengetriebene Modell und der Dichteschätzer eingelernt werden. Darauf aufbauend wird eine durchschnittliche gewichtete Abweichung zwischen den prognostizierten Ausgangsvariablen und den tatsächlich auftretenden Ausgangsvariablen ermittelt. Überschreitet die mittlere gewichtete Abweichung mehrmals hintereinander einen vorgegebenen Schwellwert, wird ein Fehler im Betrieb erkannt und ein Alarm ausgegeben.

Die Aufgabe der vorliegenden Erfindung ist es, ein Verfahren zur Fehlererkennung in einer fehlertolerant ausgebildeten Gerätesteuerung und eine Gerätesteuerung anzugeben, die zugleich eine sensitive Fehlererkennung und eine geringe Rate falsch positiver Fehlerdiagnosen ermöglichen.

Diese Aufgabe wird gelöst durch ein Verfahren zum Betrieb einer fehlertolerant ausgebildeten Gerätesteuerung mit den Merkmalen des Anspruchs 1 und eine Gerätesteuerung mit den Merkmalen des Anspruchs 8.

Hierdurch wird ein Verfahren zum Betrieb einer fehlertolerant ausgebildeten Gerätesteuerung angegeben, wobei die Gerätesteuerung mindestens zwei Kanäle zur Berechnung von Steuerungssignalen in Abhängigkeit von Eingangssignalen umfasst und die Kanäle zueinander redundant ausgebildet sind. Die Gerätesteuerung umfasst ferner mindestens eine Diagnoseeinrichtung zur Überwachung der Signalverarbeitung in den Kanälen. Das Verfahren umfasst die folgenden Schritte:
a) Berechnen der Steuerungssignale in Abhängigkeit von den Eingangssignalen in den Kanälen,
b) Bestimmen einer Kontrollgröße und einer Abweichung der Kontrollgröße gegenüber einer Referenzvorgabe in Abhängigkeit von den Eingangssignalen und den Steuerungssignalen in der Diagnoseeinrichtung,
c) Vergleichen der Abweichung mit einem wählbaren Schwellenwert.
   Erfindungsgemäß ist vorgesehen, dass die folgenden Schritte ausgeführt werden, sofern die Abweichung den wählbaren Schwellenwert überschreitet:
d) Überführen eines ausgewählten Kanals der Kanäle, in einen sicheren Betriebszustand und Anpassen eines dem ausgewählten Kanal zugeordneten Zählwertes,
e) nach Ablauf eines wählbaren Zeitraums und sofern der dem ausgewählten Kanal zugeordnete Zählwert einen wählbaren Endwert noch nicht erreicht hat: Neustarten der Signalverarbeitung in dem ausgewählten Kanal in einem Normalbetrieb.

Die vorgenannten Schritte a) bis e) des Verfahrens werden während des Betriebs der Gerätesteuerung zyklisch wiederholt ausgeführt.

Das erfindungsgemäße Verfahren macht sich vorteilhaft zu Nutze, dass Ereignisse aufgrund von Abweichungen der Signalverarbeitungen von Referenzvorgaben mit zufälliger oder statistischer Ursache, welche zu falsch positiven Fehlerdiagnosen führen könnten, meist nur zu einem zeitweiligen, kurzfristigen Überschreiten des Schwellenwertes führen. Echte Fehlerursachen führen dagegen regelmäßig zu einer langfristig gestörten Funktionalität der Gerätesteuerung und einem dauerhaften Überschreiten des Schwellenwertes. Das erfindungsgemäße Verfahren sieht daher vor, unmittelbar nach Auftreten einer den Schwellenwert überschreitenden Abweichung einen ausgewählten Kanal in einen sicheren Zustand zu überführen. Der sichere Zustand des ausgewählten Kanals wird aber nur in dem Fall dauerhaft eingestellt, wenn zyklisch nach Ablauf eines wählbaren Zeitraums und einem Neustart der Signalverarbeitung in dem ausgewählten Kanal im Normalbetrieb eine Überschreitung des Schwellenwerts in einer durch einen Endwert festgelegte Häufigkeit festgestellt wird.

Der Zählwert kann beispielsweise mit dem Wert null initialisiert werden und bei jeder festgestellten Überschreitung des Schwellenwertes inkrementiert werden, wobei der Endwert die maximale Häufigkeit an Neustarts repräsentiert. Es kann aber auch eine Dekrementierung des Zählwertes ausgehend von einem initialen maximalen Wert vorgesehen sein, bis ein Endwert, beispielsweise von null, erreicht bzw. nach unten überschritten ist. Daneben sind viele weitere Möglichkeiten zur Erfassung der Häufigkeit von erfolgten Neustarts der Signalverarbeitung im ausgewählten Kanal denkbar, die allesamt von der Erfindung mit umfasst sind.

Das erfindungsgemäße Verfahren zeichnet sich durch eine reduzierte Verzögerungszeit aus, mit der auf eine Überschreitung des Schwellenwerts reagiert wird. Es wird nicht erst anhand der Dauer der Überschreitung des Schwellenwertes oder deren Höhe entschieden, ob es sich um eine echtes oder ein falsch positives Fehlerereignis handelt. Vielmehr wird ausgenutzt, dass die fehlertolerante Gerätesteuerung auch bei Überführung eines Kanals in den sicheren Zustand eine ausreichende Funktionalität aufweist. Diese Funktionalität steht zur Verfügung, bis die Art des Fehlerereignisses ermittelt wurde. Sofern die Gerätesteuerung nach einem oder mehreren Neustartversuchen der Signalverarbeitung im Normalbetrieb wieder die Referenzvorgaben erfüllt, wird das Fehlerereignis als falsch positiv gewertet. Der Betrieb der Gerätesteuerung wird dann im Normalbetrieb fortgesetzt. Das erfindungsgemäße Verfahren vereint somit eine geringe Latenz beim Auftreten eines Fehlers mit der Möglichkeit einer anschließenden Rückkehr in den Normalbetrieb im Falle einer falsch positiven Reaktion.

Das Verfahren kann durch die Wahl der Parameter Schwellenwert, Endwert und Zeitraum an die jeweilige Gerätesteuerung angepasst werden. Ferner kann vorgesehen sein, dass der Zählwert für einzelne oder alle Kanäle nach einer festgelegten Betriebszeit im Normalbetrieb zurückgesetzt wird, beispielsweise auf den Wert null.

Der ausgewählte Kanal kann dabei beispielsweise auf Basis der der den Schwellenwert überschreitenden Abweichung zugeordneten Kontrollgröße oder entsprechend einer vorgegebenen Liste, oder auch zufällig aus den zuvor noch nicht ausgewählten Kanälen ausgewählt sein.

Gemäß einer bevorzugten Ausführungsform umfasst das Verfahren nachfolgend zu Schritt d) den folgenden Schritt:
f) sofern der dem ausgewählten Kanal zugeordnete Zählwert den Endwert überschreitet:
Rücksetzen des dem ausgewählten Kanal zugeordneten Zählwerts und Auswählen eines anderen Kanals als ausgewählter Kanal.

In dieser Ausführungsform hat die Gerätesteuerung in dem Zyklus des Verfahrens, in dem der Zählwert den Endwert erreicht hat, festgestellt, dass der Schwellenwert auch in einem sicheren Betriebszustand des Kanals überschritten wird und der Fehlerzustand fortbesteht. Die Überschreitung des Schwellenwertes wird folglich nicht durch den ausgewählten Kanal verursacht. Aus diesem Grund sieht Schritt f) einen Wechsel des ausgewählten Kanals und ein Rücksetzen von dessen Zählwert vor. Abhängig von der Art des zu steuernden Geräts kann auch ein zeitweiser Verlust der Funktionalität in Kauf genommen werden, bis die Gerätesteuerung den den Fehlerzustand verursachenden Kanal identifiziert hat.

In der vorstehend beschriebenen Ausführungsform bleibt die Auswahl des jeweils ausgewählten Kanals bestehen, bis der dem ausgewählten Kanal zugeordnete Zählwert den Endwert überschreitet.

Erfindungsgemäß ist vorgesehen, dass für jeden Kanal zumindest eine Kontrollgröße und eine Abweichung der jeweiligen Kontrollgröße gegenüber einer dem jeweiligen Kanal zugeordneten Referenzvorgabe bestimmt wird und als ausgewählter Kanal vor Schritt d) einer der Kanäle ausgewählt wird, für die die Abweichung den wählbaren Schwellenwert überschreitet. Dies bietet den Vorteil, dass die Diagnosevorrichtung anhand von kanalspezifischen Kontrollgrößen einen Kanal identifizieren kann, der von der Referenzvorgabe abweicht. Dieser kann dann gezielt in den sicheren Zustand überführt werden.

Bevorzugt bleibt die Auswahl des ausgewählten Kanals solange bestehen, bis die Abweichung den Schwellenwert für den ausgewählten Kanal nicht länger überschreitet. Durch diese Maßnahme wird eine kanalweise Feststellung der Art des Fehlerereignisses bewirkt. Sämtliche Kanäle, bei denen eine Überschreitung des jeweiligen Schwellenwertes auftritt, werden nacheinander auf die Art des Fehlerereignisses untersucht.

Es kann auch vorgesehen sein, mehrere Kanäle gleichzeitig auszuwählen und die Schritte des Verfahrens für die mehreren ausgewählten Kanäle entsprechend parallel auszuführen.

In bevorzugten Ausführungsformen wird der Schwellenwert über mehrere Zyklen des Verfahrens iterativ derart angepasst, dass die Anzahl der Neustarts der Signalverarbeitung in allen Kanälen zusammengenommen pro Zeiteinheit in einem vorgegebenen Bereich liegt. Der vorgegebene Bereich kann beispielsweise 1 bis 10 Neustarts pro Betriebsstunde der Gerätesteuerung betragen. Eine Erhöhung des Schwellenwerts führt prinzipbedingt zu einer niedrigeren Anzahl falsch positiver Schwellenwertüberschreitungen und damit zu einer niedrigeren Anzahl Neustarts pro Zeiteinheit, während die Anzahl der Neustarts abnimmt, wenn der Schwellenwert abgesenkt wird. Durch die iterative Anpassung des Schwellenwerts kann das Verfahren somit auf eine besonders effiziente Fehlererkennung eingestellt werden.

Erfindungsgemäß ist vorgesehen, dass sofern in Schritt c) festgestellt wird, dass der Schwellenwert für den im vorangegangenen Zyklus ausgewählten Kanal nicht mehr überschritten wird und der dem Kanal zugeordnete Zählwert einen Referenzwert nicht erreicht hat, der in Schritt e) abzuwartende Zeitraum für die nachfolgenden Zyklen reduziert wird. Durch dieses Vorgehen wird der abzuwartende Zeitraum derart optimiert, dass die Gerätesteuerung zugleich schnell und auch zuverlässig zwischen falsch positiven und echten Fehlerereignissen unterscheidet. Der Zeitraum kann auf diese Weise der typischen Zeitspanne eines falsch positiven Fehlerereignisses in dem jeweiligen System angepasst werden. Der Referenzwert entspricht vorzugsweise 50% bis 75% der durch den Endwert repräsentierten Anzahl von Neustarts der Signalverarbeitung.

Bevorzugt ist der Endwert derart gewählt, dass er nach einer Anzahl von Neustarts der Signalverarbeitung im Bereich von 1 bis 5 erreicht wird.

In einigen Ausführungsformen der Erfindung umfasst die Diagnoseeinrichtung einen Zustandsbeobachter und ein Systemmodell der Signalverarbeitung, welches mittels des Zustandsbeobachters angepasst wird. Der Beobachter kann beispielsweise ein Kalman-Filter umfassen.

In einer besonders bevorzugten Ausführungsform steuert die Gerätesteuerung einen Aktuator und/oder einen Stellmotor einer Kraftfahrzeuglenkung. Kraftfahrzeugsteuerungen sind sicherheitskritische Systeme, die schnell und zuverlässig in einen sicheren Zustand überführt werden müssen, wenn ein Fehler auftritt, aber zugleich im Falle einer falsch positiven, dauerhaften Überführung in einen sicheren Zustand einen hohen Aufwand beim Fahrzeughalter auslösen. Das erfindungsgemäße Verfahren bietet hier den Vorteil falsch positive Fehlerereignisse automatisiert zu erkennen und in diesem Falle ohne den Besuch einer Fachwerkstatt wieder zu einem Normalbetrieb zurückzukehren, insbesondere auch ohne dass der Fahrer überhaupt Notiz von dem falsch positiven Fehlerereignis nimmt.

In einer weiteren vorteilhaften Ausführung wird die Diagnoseeinrichtung zur Überwachung einer Bremslenkvorrichtung oder eines Momentenvektorlenkungssystems eingesetzt.

Vorrichtungsmäßig wird die Aufgabe durch eine Gerätesteuerung gelöst, die mindestens zwei Kanäle zur Berechnung von Steuerungssignalen in Abhängigkeit von Eingangssignalen umfasst, wobei die Kanäle zueinander redundant ausgebildet sind. Die Gerätesteuerung umfasst ferner mindestens eine Diagnoseeinrichtung zur Überwachung der Signalverarbeitung in den Kanälen. Erfindungsgemäß sind die Signalverarbeitung in den Kanälen und die Diagnoseeinrichtung dazu eingerichtet, das vorstehend beschriebene Verfahren auszuführen.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch eine Kraftfahrzeuglenkung mit einer erfindungsgemäßen Gerätesteuerung zur Ansteuerung eines Lenkstellers der Kraftfahrzeuglenkung,
- Fig. 2: zeigt schematisch den Aufbau der Gerätesteuerung gemäß Fig. 1 in einer Detaildarstellung,
- Fig. 3: zeigt schematisch ein Ablaufdiagramm eines Verfahrens gemäß einem Vergleichsbeispiel,
- Fig. 4: zeigt schematisch ein Ablaufdiagramm des erfindungsgemäßen Verfahrens gemäß einem Ausführungsbeispiel.

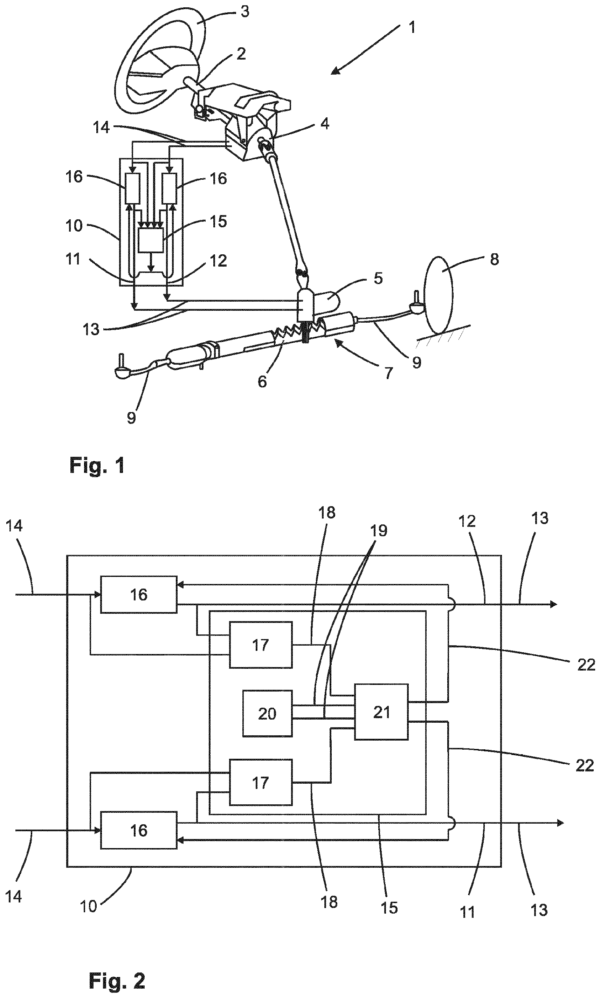

In **Fig. 1** ist schematisch der Aufbau einer Kraftfahrzeuglenkung 1 gezeigt. Die Kraftfahrzeuglenkung 1 weist ein als Lenkrad ausgebildetes Lenkeingabemittel 3 auf, welches über eine Lenkwelle 2 mit einem Lenkeingabesensor 4 verbunden ist. Der Lenkeingabesensor 4 ist zur Messung des vom Fahrer eingegebenen Lenkradwinkels und/oder Lenkmoments ausgebildet. Die Lenkwelle 2 erstreckt sich bis zu einem Lenkgetriebe 7, in welchem die Lenkeingabe in eine entsprechende Translation einer Zahnstange 6 umgesetzt wird. Die Translationen der Zahnstange 6 werden über Spurstangen 9 auf gelenkte Räder 8 übertragen, um den durch die Lenkeingabe vorgegebenen Radlenkwinkel der Räder 8 einzustellen. Zur Unterstützung bei der Einstellung des gewünschten Radlenkwinkels greift ein Stellmotor 5 als Lenksteller an der Lenkwelle 2 - oder in alternativen Ausführungsformen an der Zahnstange - an. Der Stellmotor 5 wird in Abhängigkeit von dem vom Lenkeingabesensor 4 aufgenommenen Lenkwinkel und/oder Lenkmoment durch eine Gerätesteuerung 10 angesteuert.

In dem in Fig. 1 dargestellten Ausführungsbeispiel werden die Messsignale des Lenkeingabesensors 4 der Gerätesteuerung 10 als Eingabesignale 14 zugeführt. Der Einfachheit halber sind in Fig.1 keine Anschlüsse der Gerätesteuerung 10 für weitere Eingabesignale dargestellt; dem Fachmann ist jedoch bewusst, dass die Ansteuerung des Stellmotors 5 einer modernen Kraftfahrzeuglenkung 1 einer Vielzahl weiterer Eingabesignale unterliegen kann, insbesondere zur Bereitstellung aktiver Lenkfunktionen. Die Gerätesteuerung 10 stellt ausgangsseitig Steuerungssignale 13 für die Ansteuerung des Stellmotors 5 bereit.

Der gesamte Signalweg zwischen Lenkeingabesensor 4 und Stellmotor 5 ist zweikanalig redundant ausgeführt. Bevorzugt sind auch der Lenkeingabesensor 4 und der Stellmotor 5 zweifach redundant aufgebaut, so dass zwei vollständige, voneinander unabhängige Systeme zur Einstellung des Radlenkwinkels vorgesehen sind.

Die Gerätesteuerung 10 selbst umfasst zwei Kanäle 11, 12 zur Berechnung der Steuerungssignale 13 in Abhängigkeit von den Eingangssignalen 14. Die Kanäle 11, 12 sind dabei zueinander redundant ausgebildet. Die Gerätesteuerung 10 umfasst ferner mindestens eine Diagnoseeinrichtung 15 zur Überwachung der Signalverarbeitungen 16 in den Kanälen 11, 12.

**Fig. 2** zeigt weitere Details des Aufbaus der Gerätesteuerung 10. In jedem der Kanäle 11, 12 ist eine Signalverarbeitung 16 vorgesehen, die die Steuerungssignale 13 aus Eingangssignale 14 berechnet. Die Diagnoseeinrichtung 15 enthält - vorzugsweise für jeden Kanal 11, 12 - eine Kontrolleinheit 17, der die Eingangssignale 14 und die Steuerungssignale 13 der Kanäle 11, 12 zugeführt werden. Die Kontrolleinheit 17 ist dazu ausgebildet, aus den Eingangssignalen 14 und den Steuerungssignalen 13 mindestens eine Kontrollgröße 18 zu bestimmen. Die Kontrollgrößen 18 werden einer Vergleichseinheit 21 zugeführt, welche aus den Kontrollgrößen 18 mittels in einem Speicher 20 hinterlegten Referenzvorgaben 19 Abweichungen bestimmt und diese jeweils mit einem zugeordneten Schwellenwert vergleicht. Abhängig von der Auswertung der Abweichungen durch die Vergleichseinheit 21 wird mittels eines von der Vergleichseinheit ausgegebenen Diagnosesignals 22 Einfluss auf die jeweilige Signalverarbeitung 16 genommen. Die Signalverarbeitung 16 kann beispielsweise mittels des Diagnosesignals 22 in einen sicheren Zustand überführt, oder im Normalbetrieb neu gestartet werden.

Die Diagnoseeinrichtung 15 kann einen Zustandsbeobachter und ein Systemmodell der Signalverarbeitung 16 umfassen, welches mittels des Zustandsbeobachters angepasst wird.

Die in Fig. 2 gezeigte erfindungsgemäße Gerätesteuerung ist in gleicher Weise auch in einer Steer-by-Wire Kraftfahrzeuglenkung einsetzbar, bei der keine mechanische Verbindung zwischen Lenkwelle und gelenkten Rädern besteht. In diesem ist der Stellmotor des Lenkstellers alleine für die Verstellung der gelenkten Räder vorgesehen und es existiert keine mechanische Rückfallebene. Aus diesem Grunde ist der Einsatz des erfindungsgemäßen Verfahrens auch und gerade in Steer-by-Wire Kraftfahrzeuglenkungen vorteilhaft. Bei einer Steer-by-Wire Kraftfahrzeuglenkung kann die erfindungsgemäße Gerätesteuerung alternativ oder zusätzlich auch für die Ansteuerung des Stellmotors eines Feedback-Aktuators eingesetzt werden, der die Rückwirkungen der Fahrbahn auf das Lenkeingabemittel überträgt.

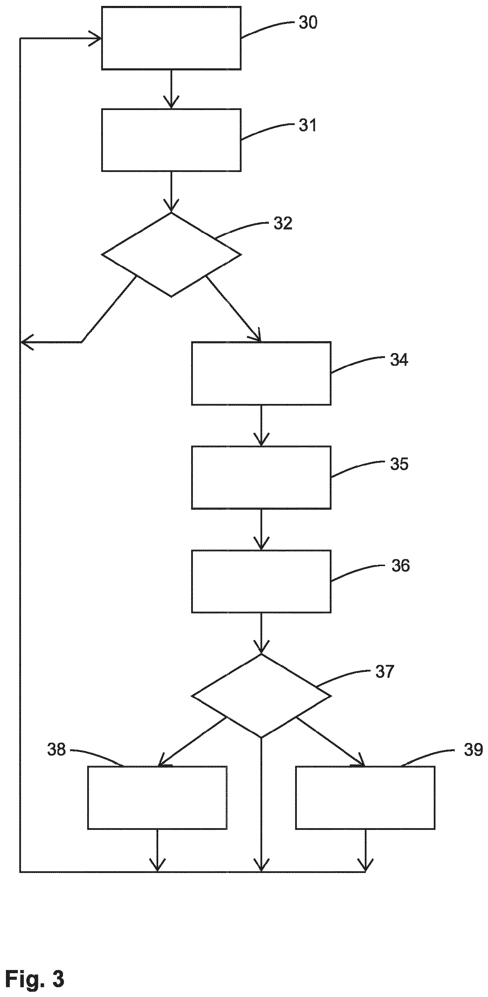

**Fig. 3** zeigt ein Ablaufdiagramm eines Vergleichsbeispiels eines Verfahrens zum Betrieb einer fehlertolerant ausgebildeten Gerätesteuerung 10 (wie beispielsweise in Fig. 1 und 2 gezeigt) umfassend mindestens zwei Kanäle 11, 12 zur Berechnung von Steuerungssignalen 13 in Abhängigkeit von Eingangssignalen 14, wobei die Kanäle 11, 12 zueinander redundant ausgebildet sind, und mindestens eine Diagnoseeinrichtung 15 zur Überwachung der Signalverarbeitung 16 in den Kanälen 11, 12 aufweisen.

In Schritt 30 werden die Steuerungssignale 13 in Abhängigkeit von den Eingangssignalen 14 in den Kanälen 11, 12 berechnet. In Schritt 31 wird eine Kontrollgröße 18 und eine Abweichung der Kontrollgröße gegenüber einer Referenzvorgabe 19 in Abhängigkeit von den Eingangssignalen 14 und den Steuerungssignalen 13 in der Diagnoseeinrichtung 15 bestimmt. Anschließend wird in Schritt 32 die Abweichung mit einem wählbaren Schwellenwert verglichen.

Sofern die Abweichung den Schwellenwert nicht überschreitet, wird ein neuer Ausführungszyklus des Verfahrens mit Schritt 30 begonnen.

Sofern die Abweichung den wählbaren Schwellenwert überschreitet, werden die folgenden Schritte ausgeführt:
In Schritt 34 wird ein ausgewählter Kanal 11; 12 der Kanäle 11, 12, in einen sicheren Betriebszustand überführt und in Schritt 35 ein dem ausgewählten Kanal 11; 12 zugeordneter Zählwert angepasst. Beispielsweise kann der Zählwert jeweils um eins erhöht werden. In Schritt 36 wird der Ablauf eines wählbaren Zeitraums abgewartet und anschließend in Schritt 37 überprüft, ob der dem ausgewählten Kanal 11; 12 zugeordnete Zählwert einen wählbaren Endwert erreicht hat.

Sofern der dem ausgewählten Kanal 11; 12 zugeordnete Zählwert den wählbaren Endwert noch nicht erreicht hat, wird in Schritt 38 die Signalverarbeitung 16 in dem ausgewählten Kanal 11; 12 in einem Normalbetrieb neu gestartet. Der Endwert ist vorzugsweise derart gewählt, dass er nach einer Anzahl von Neustarts der Signalverarbeitung im Bereich von 1 bis 5 erreicht wird.

Sofern der Zählwert den Endwert überschritten hat, wird in Schritt 39 der Zählwert, beispielsweise auf null, zurückgesetzt und für den nächsten Ausführungszyklus ein anderer Kanal 12; 11 als ausgewählter Kanal bestimmt.

Nach Abschluss der Schritte 38 oder 39 und im Falle, dass der zugeordnete Zählwert gleich dem Endwert ist, wird ein neuer Ausführungszyklus des Verfahrens mit Schritt 30 begonnen.

Bevorzugt erfolgt die Auswahl des jeweils ausgewählten Kanals 11; 12 in der Reihenfolge einer festgelegten Liste, oder auch zufällig aus den zuvor noch nicht ausgewählten Kanälen.

Die Auswahl des ausgewählten Kanals 11; 12 für den ersten Ausführungszyklus kann im Rahmen einer Initialisierung stattfinden, die zu einem beliebigen Zeitpunkt vor Schritt 34 ausgeführt werden kann.

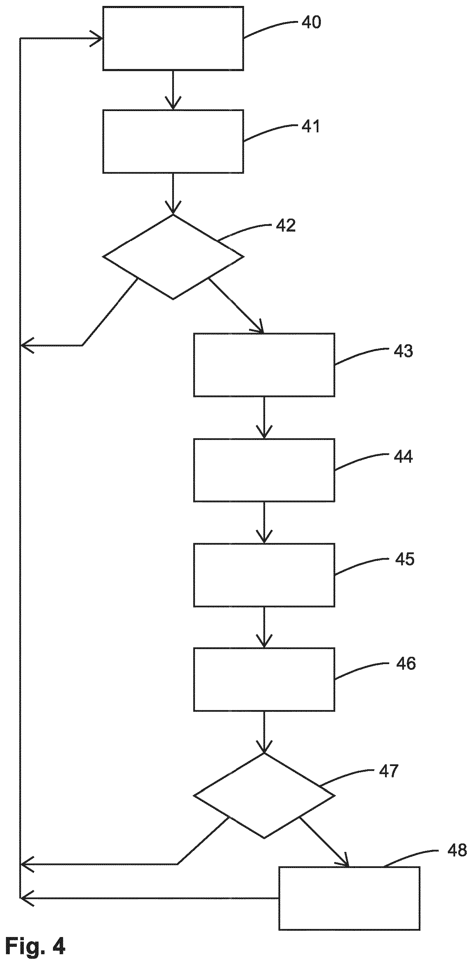

In **Fig. 4** ist ein Ablaufdiagramm eines Ausführungsbeispiels des erfindungsgemäßen Verfahrens zum Betrieb einer fehlertolerant ausgebildeten Gerätesteuerung 10 gezeigt.

Die Schritte 40 bis 48 entsprechen jeweils im Wesentlichen den Schritten 30 bis 38 des ersten Ausführungsbeispiels gemäß Fig. 3.

Das Ausführungsbeispiel unterscheidet sich von dem Vergleichsbeispiel dadurch, dass in Schritt 41 für jeden Kanal 11, 12 zumindest eine Kontrollgröße 18 und eine Abweichung der jeweiligen Kontrollgröße 18 gegenüber einer dem jeweiligen Kanal 11, 12 zugeordneten Referenzvorgabe 19 bestimmt wird. In Schritt 42 werden die zuvor bestimmten Abweichungen für jeden Kanal 11, 12 mit zugeordneten Schwellenwerten verglichen.

Es kann vorgesehen sein, dass nur in dem Fall, dass für keinen Kanal ein Überschreiten des zugeordneten Schwellenwertes festgestellt wird, ein neuer Ausführungszyklus des Verfahrens mit Schritt 40 begonnen wird.

Sofern für mindestens einen Kanal 11, 12 die zugeordnete Abweichung den Schwellenwert überschreitet, wird in Schritt 43 als ausgewählter Kanal 11; 12 einer der Kanäle 11, 12 ausgewählt, für die die Abweichung den wählbaren Schwellenwert überschreitet.

Vorzugsweise bleibt die Auswahl des ausgewählten Kanals 11; 12 über aufeinanderfolgende Ausführungszyklen solange bestehen, bis die Abweichung den Schwellenwert für den ausgewählten Kanal 11; 12 nicht länger überschreitet.

In einer bevorzugten Ausführungsform des Verfahrens nach Fig. 4 wird der Schwellenwert über mehrere Zyklen des Verfahrens iterativ derart angepasst, dass die Anzahl der Neustarts der Signalverarbeitung in allen Kanälen 11, 12 zusammengenommen pro Zeiteinheit in einem vorgegebenen Bereich liegt.

Ferner ist vorgesehen, dass sofern in Schritt 42 festgestellt wird, dass der Schwellenwert für den im vorangegangenen Zyklus ausgewählten Kanal 11; 12 nicht mehr überschritten wird und der dem Kanal 11; 12 zugeordnete Zählwert einen Referenzwert nicht überschreitet, der in Schritt 46 abzuwartende Zeitraum für die nachfolgenden Zyklen reduziert wird.

In Schritt 47 wird der dem ausgewählten Kanal 11; 12 zugeordnete Zählwert mit dem wählbaren Endwert verglichen. Sofern der dem ausgewählten Kanal 11; 12 zugeordnete Zählwert den wählbaren Endwert noch nicht erreicht hat, wird in Schritt 48 die Signalverarbeitung 16 in dem ausgewählten Kanal 11; 12 in einem Normalbetrieb neu gestartet. Nach Abschluss des Schrittes 48 und im Falle, dass der dem ausgewählten Kanal zugeordnete Zählwert größer oder gleich dem Endwert ist, wird ein neuer Ausführungszyklus des Verfahrens mit Schritt 40 begonnen.

Im Übrigen gelten die Ausführungen zum Vergleichsbeispiel gemäß Fig. 3 für das Ausführungsbeispiel gemäß Fig. 4 entsprechend.

### Bezugszeichenliste

- 1: Kraftfahrzeuglenkung
- 2: Lenkwelle
- 3: Lenkeingabemittel
- 4: Lenkeingabesensor
- 5: Stellmotor
- 6: Zahnstange
- 7: Lenkgetriebe
- 8: Räder
- 9: Spurstangen
- 10: Gerätesteuerung
- 11: Kanal
- 12: Kanal
- 13: Steuerungssignale
- 14: Eingangssignale
- 15: Diagnoseeinrichtung
- 16: Signalverarbeitung
- 17: Kontrolleinheit
- 18: Kontrollgröße
- 19: Referenzvorgabe
- 20: Speicher
- 21: Vergleichseinheit
- 22: Diagnosesignal

- 30, 40: Berechnen der Steuersignale
- 31, 41: Bestimmen der Kontrollgröße(n) und Abweichung(en)
- 32, 42: Vergleichen der Abweichung(en) mit Referenzvorgabe(n)
- 43: Auswählen eines ausgewählten Kanals
- 34, 44: Überführen des ausgewählten Kanals in sicheren Zustand
- 35, 45: Anpassen des Zählwerts
- 36, 46: Ablauf des Zeitraums
- 37, 47: Vergleichen des Zählwerts mit Endwert
- 38, 48: Neustarten der Signalverarbeitung
- 39: Rücksetzen des Zählwerts und Auswahl eines anderen Kanals

## Patentansprüche

1. Verfahren zum Betrieb einer fehlertolerant ausgebildeten Gerätesteuerung (10) umfassend mindestens zwei Kanäle (11, 12) zur Berechnung von Steuerungssignalen (13) in Abhängigkeit von Eingangssignalen (14), wobei die Kanäle (11, 12) zueinander redundant ausgebildet sind, und mindestens eine Diagnoseeinrichtung (15) zur Überwachung der Signalverarbeitung (16) in den Kanälen (11, 12), wobei das Verfahren die folgenden Schritte umfasst:
a) Berechnen (30, 40) der Steuerungssignale (13) in Abhängigkeit von den Eingangssignalen (14) in den Kanälen (11, 12),
b) Bestimmen (31, 41) einer Kontrollgröße (18) und einer Abweichung der Kontrollgröße gegenüber einer Referenzvorgabe (19) in Abhängigkeit von den Eingangssignalen (14) und den Steuerungssignalen (13) in der Diagnoseeinrichtung (15),
c) Vergleichen (32, 42) der Abweichung mit einem wählbaren Schwellenwert, wobei die folgenden Schritte ausgeführt werden, sofern die Abweichung den wählbaren Schwellenwert überschreitet:
d) Überführen (34, 44) eines ausgewählten Kanals (11; 12) der Kanäle (11, 12), in einen sicheren Betriebszustand, wobei die Schritte des Verfahrens während des Betriebs der Gerätesteuerung zyklisch wiederholt ausgeführt werden, **dadurch gekennzeichnet, dass** zusätzlich in Schritt
d) ein Anpassen (35, 45) eines dem ausgewählten Kanal (11; 12) zugeordneten Zählwertes erfolgt, und
das Verfahren den folgenden Schritt umfasst:
e) nach Ablauf (36, 46) eines wählbaren Zeitraums und sofern der dem ausgewählten Kanal (11; 12) zugeordnete Zählwert einen wählbaren Endwert noch nicht erreicht hat: Neustarten (38, 48) der Signalverarbeitung (16) in dem ausgewählten Kanal (11; 12) in einem Normalbetrieb,
wobei für jeden Kanal (11, 12) zumindest eine Kontrollgröße (18) und eine Abweichung der jeweiligen Kontrollgröße (18) gegenüber einer dem jeweiligen Kanal (11, 12) zugeordneten Referenzvorgabe (19) bestimmt wird und als ausgewählter Kanal (11; 12) vor Schritt d) einer der Kanäle (11, 12) ausgewählt wird, für die die Abweichung den wählbaren Schwellenwert überschreitet und wobei
sofern in Schritt c) festgestellt wird, dass der Schwellenwert für den im vorangegangenen Zyklus ausgewählten Kanal (11; 12) nicht mehr überschritten wird und der dem Kanal (11; 12) zugeordnete Zählwert einen Referenzwert nicht erreicht hat, der in Schritt e) abzuwartende Zeitraum für die nachfolgenden Zyklen reduziert wird.

2. Verfahren nach Anspruch 1, **dadurch gekennzeichnet, dass** die Auswahl des ausgewählten Kanals (11; 12) solange bestehen bleibt, bis die Abweichung den Schwellenwert für den ausgewählten Kanal (11; 12) nicht länger überschreitet.

3. Verfahren nach Anspruch 1 oder 2, **dadurch gekennzeichnet, dass** der Schwellenwert über mehrere Zyklen des Verfahrens iterativ derart angepasst wird, dass die Anzahl der Neustarts der Signalverarbeitung in allen Kanälen (11, 12) zusammengenommen pro Zeiteinheit in einem vorgegebenen Bereich liegt.

4. Verfahren nach einem der Ansprüche 1 bis 3, **dadurch gekennzeichnet, dass** der Endwert derart gewählt ist, dass der Endwert nach einer Anzahl von Neustarts der Signalverarbeitung (16) im Bereich 1 bis 5 erreicht wird.

5. Verfahren nach einem der Ansprüche 1 bis 4, **dadurch gekennzeichnet, dass** die Diagnoseeinrichtung (15) einen Zustandsbeobachter und ein Systemmodell der Signalverarbeitung (16) umfasst, welches mittels des Zustandsbeobachters angepasst wird.

6. Verfahren nach einem der Ansprüche 1 bis 5, **dadurch gekennzeichnet, dass** die Gerätesteuerung (10) einen Aktuator einer Kraftfahrzeuglenkung (1) steuert.

7. Verfahren nach einem der Ansprüche 1 bis 6, **dadurch gekennzeichnet, dass** die Gerätesteuerung (10) einen Stellmotor (5) einer Kraftfahrzeuglenkung (1) steuert.

8. Gerätesteuerung (10) umfassend mindestens zwei Kanäle (11, 12) zur Berechnung von Steuerungssignalen (13) in Abhängigkeit von Eingangssignalen (14), wobei die Kanäle (11, 12) zueinander redundant ausgebildet sind, und mindestens eine Diagnoseeinrichtung (15) zur Überwachung der Signalverarbeitung (16) in den Kanälen (11, 12), **dadurch gekennzeichnet, dass** die Signalverarbeitung (16) in den Kanälen (11, 12) und die Diagnoseeinrichtung (15) dazu eingerichtet sind, das Verfahren nach einem der Ansprüche 1 bis 7 auszuführen.

## Claims

1. Method for operating a fault-tolerant device control (10) comprising at least two channels (11, 12) for calculating control signals (13) as a function of input signals (14), wherein the channels (11, 12) are designed to be redundant with respect to one another, and at least one diagnostic device (15) for monitoring the signal processing (16) in the channels (11, 12), wherein the method comprises the following steps:
a) calculating (30, 40) the control signals (13) as a function of the input signals (14) in the channels (11, 12),
b) determining (31, 41) a control variable (18) and a deviation of the control variable from a reference specification (19) as a function of the input signals (14) and the control signals (13) in the diagnostic device (15),
c) comparing (32, 42) the deviation with a selectable threshold value,
wherein the following steps are performed if the deviation exceeds the selectable threshold value:
d) transferring (34, 44) a selected channel (11; 12) of the channels (11, 12) to a safe operating state,
wherein the steps of the method are performed cyclically during operation of the device control, **characterised in that,** additionally, in step
d) an adjustment (35, 45) of a count value assigned to the selected channel (11; 12) is performed, and
the method comprises the following step:
e) after the expiry (36, 46) of a selectable period of time and provided that the count value assigned to the selected channel (11; 12) has not yet reached a selectable end value: restarting (38, 48) the signal processing (16) in the selected channel (11; 12) in normal operation,
wherein for each channel (11, 12) at least one control variable (18) and a deviation of the respective control variable (18) from a reference specification (19) assigned to the respective channel (11, 12) are determined, and as the selected channel (11; 12) before step d) is selected from the channels (11, 12) for which the deviation exceeds the selectable threshold value, and wherein,
if it is determined in step c) that the threshold value for the channel selected in the previous cycle (11; 12) is no longer exceeded and the count value assigned to the channel (11; 12) has not reached a reference value, the waiting period to be observed in step e) is reduced for the subsequent cycles.

2. Method according to claim 1, **characterised in that** the selection of the selected channel (11; 12) remains in place until the deviation no longer exceeds the threshold value for the selected channel (11; 12).

3. Method according to claim 1 or 2, **characterised in that** the threshold value is iteratively adjusted over several cycles of the method in such a way that the number of restarts of signal processing in all channels (11, 12) combined per unit of time lies within a predetermined range.

4. Method according to one of claims 1 to 3, **characterised in that** the end value is selected such that the end value is reached after a number of restarts of the signal processing (16) in the range of 1 to 5.

5. Method according to one of claims 1 to 4, **characterised in that** the diagnostic device (15) comprises a state observer and a system model of the signal processing (16), which is adjusted by means of the state observer.

6. Method according to one of claims 1 to 5, **characterised in that** the device control (10) controls an actuator of a motor vehicle steering system (1).

7. Method according to one of claims 1 to 6, **characterised in that** the device control (10) controls a servomotor (5) of a motor vehicle steering system (1).

8. Device control (10) comprising at least two channels (11, 12) for calculating control signals (13) as a function of input signals (14), wherein the channels (11, 12) are designed to be redundant with respect to each other, and at least one diagnostic device (15) for monitoring the signal processing (16) in the channels (11, 12), **characterised in that** the signal processing (16) in the channels (11, 12) and the diagnostic device (15) are designed to execute the method according to one of claims 1 to 7.

## Revendications

1. Procédé pour faire fonctionner une commande d'appareil (10) conçue pour tolérer les défauts, comprenant au moins deux canaux (11, 12) pour calculer des signaux de commande (13) en fonction de signaux d'entrée (14), les canaux (11, 12) sont redondants l'un par rapport à l'autre, et au moins un dispositif de diagnostic (15) pour surveiller le traitement des signaux (16) dans les canaux (11, 12), le procédé comprenant les étapes suivantes :
a) calculer (30, 40) les signaux de commande (13) en fonction des signaux d'entrée (14) dans les canaux (11, 12),
b) détermination (31, 41) d'une grandeur de contrôle (18) et d'un écart de la grandeur de contrôle par rapport à une consigne de référence (19) en fonction des signaux d'entrée (14) et des signaux de commande (13) dans le dispositif de diagnostic (15),
c) comparer (32, 42) l'écart avec une valeur seuil sélectionnable,
les étapes suivantes étant exécutées si l'écart dépasse la valeur seuil sélectionnable :
d) transfert (34, 44) d'un canal sélectionné (11 ; 12) parmi les canaux (11, 12) dans un état de fonctionnement sûr,
les étapes du procédé étant exécutées de manière cyclique pendant le fonctionnement de la commande de l'appareil, **caractérisé en ce que,** en outre, à l'étape
d), on adapte (35, 45) une valeur de comptage associée au canal sélectionné (11 ; 12), et
le procédé comprend l'étape suivante :
e) après l'écoulement (36, 46) d'une période sélectionnable et dans la mesure où la valeur de comptage attribuée au canal sélectionné (11 ; 12) n'a pas encore atteint une valeur finale sélectionnable : redémarrage (38, 48) du traitement du signal (16) dans le canal sélectionné (11 ; 12) dans un fonctionnement normal,
au moins une grandeur de contrôle (18) et un écart de la grandeur de contrôle respective (18) par rapport à une consigne de référence (19) attribuée au canal respectif (11, 12) étant déterminés pour chaque canal (11, 12) et, en tant que canal sélectionné (11 ; 12) avant l'étape d) est sélectionné parmi les canaux (11, 12) pour lesquels l'écart dépasse la valeur seuil sélectionnable et dans lequel
si l'on constate à l'étape c) que la valeur seuil pour le canal sélectionné dans le cycle précédent (11 ; 12) n'est plus dépassée et que la valeur de comptage attribuée au canal (11 ; 12) n'a pas atteint une valeur de référence, la période d'attente pour les cycles suivants est réduite à l'étape e).

2. Procédé selon la revendication 1, **caractérisé en ce que** la sélection du canal sélectionné (11 ; 12) reste inchangée jusqu'à ce que l'écart ne dépasse plus la valeur seuil pour le canal sélectionné (11 ; 12).

3. Procédé selon la revendication 1 ou 2, **caractérisé en ce que** la valeur seuil est ajustée de manière itérative sur plusieurs cycles du procédé de telle sorte que le nombre de redémarrages du traitement du signal dans tous les canaux (11, 12) pris ensemble par unité de temps se situe dans une plage prédéfinie.

4. Procédé selon l'une des revendications 1 à 3, **caractérisé en ce que** la valeur finale est choisie de telle sorte que la valeur finale soit atteinte après un nombre de redémarrages du traitement du signal (16) compris entre 1 et 5.

5. Procédé selon l'une des revendications 1 à 4, **caractérisé en ce que** le dispositif de diagnostic (15) comprend un observateur d'état et un modèle de système de traitement du signal (16) qui est ajusté au moyen de l'observateur d'état.

6. Procédé selon l'une des revendications 1 à 5, **caractérisé en ce que** la commande d'appareil (10) commande un actionneur d'une direction de véhicule automobile (1).

7. Procédé selon l'une des revendications 1 à 6, **caractérisé en ce que** la commande d'appareil (10) commande un servomoteur (5) d'une direction de véhicule automobile (1).

8. Commande d'appareil (10) comprenant au moins deux canaux (11, 12) pour calculer des signaux de commande (13) en fonction de signaux d'entrée (14), les canaux (11, 12) étant redondants les uns par rapport aux autres, et au moins un dispositif de diagnostic (15) pour surveiller le traitement des signaux (16) dans les canaux (11, 12), **caractérisé en ce que** le traitement des signaux (16) dans les canaux (11, 12) et le dispositif de diagnostic (15) sont conçus pour exécuter le procédé selon l'une des revendications 1 à 7.
